# EUROPEAN PATENT APPLICATION

(11) **EP 4 502 037 A1**
(43) Date of publication of application: **05.02.2025**
(21) Application number: 23774812.4
(22) Date of filing: 17.03.2023
(51) Int. Cl.: C08L 21/00, C08L 75/08, C08G 18/69, C08G 18/76, C08K 3/013

(54) **THERMALLY CONDUCTIVE POLYMER COMPOSITION, MATERIAL FOR FORMING THERMALLY CONDUCTIVE POLYMER COMPOSITION, AND THERMALLY CONDUCTIVE POLYMER**

(30) Priority: 24.03.2022 JP 2022048886
(71) Applicant: Mitsubishi Materials Corporation, Tokyo 100-8117 (JP)
(72) Inventor: NAKAHARA Yuu, Amagasaki-shi, Hyogo 660-0856 (JP); ASHIDA Keiko, Amagasaki-shi, Hyogo 660-0856 (JP)
(74) Representative: Hoffmann Eitle
(86) International application number: PCT/JP2023/010635
(87) International publication number: WO 2023/182217

(57) **Abstract**

The thermally conductive polymer composition contains a liquid rubber having two or more hydroxyl groups in one molecule, a solvent having one or more hydroxyl groups in one molecule, a curing agent having, in one molecule, two or more functional groups which are reactive with both the hydroxyl groups of the liquid rubber and the hydroxyl groups of the solvent, and a filler having thermal conductivity.

## Description

### TECHNICAL FIELD

The present invention relates to a thermally conductive polymer composition, a material for forming a thermally conductive polymer composition, and a thermally conductive polymer.

Priority is claimed on Japanese Patent Application No. 2022-048886, filed March 24, 2022, the content of which is incorporated herein by reference.

### BACKGROUND ART

A heat transfer material which is provided between a heat generator and a heat dissipation member and propagates heat has been known in various forms, such as a grease type, a gap filler type, and a sheet type. By using these heat transfer materials, for example, heat generated in the heat generator can be efficiently dissipated to the heat dissipation member such as a metal housing or a heat sink. By installing such a heat transfer material between the heat generator and the heat dissipation member, a thermal resistance between the heat generator and the heat dissipation member can be reduced.

In recent years, as the performance and integration of various electronic devices have been improved, a structure in which heat generated in association with the operation of a component (heat generator) can be efficiently dissipated to the outside has been required to be improved in terms of heat dissipation. Therefore, there is a demand for the heat transfer material capable of further reducing the thermal resistance between the heat generator and the heat dissipation member.

In order to reduce the thermal resistance between the heat generator and the heat dissipation member, it is considered to increase a thermal conductivity of the heat transfer material itself, or to improve adhesiveness between the heat transfer material and the heat generator or the heat dissipation member, which is in contact with the heat transfer material, to reduce a thermal resistance generated at an interface (interfacial thermal resistance).

In the related art, as a general heat transfer material, a heat transfer material filled with a filler having high thermal conductivity, such as alumina, in a silicon resin or the like has been known (for example, see Patent Document 1).

In addition, in order to reduce the thermal resistance generated at an interface between the heat transfer material and each member in contact with the heat transfer material, for example, a heat transfer material which has improved adhesiveness to a surface of the each member by reducing a hardness also has been known (for example, see Patent Document 2).

Furthermore, in order to reduce the thermal resistance generated at an interface between the heat transfer material and each member in contact with the heat transfer material, it also has been known to mix a plurality of highly fluidic fluids to obtain a curable two-liquid curing type gap filler or a putty-like heat transfer material (for example, see Patent Documents 3 and 4).

### CITATION LIST

### Patent Documents

[Patent Document 1]
   Japanese Unexamined Patent Application, First Publication No. 2005-006428
[Patent Document 2]
   Japanese Unexamined Patent Application, First Publication No. 2019-011423
[Patent Document 3]
   Japanese Unexamined Patent Application, First Publication No. 2020-050701
[Patent Document 4]
   Japanese Unexamined Patent Application, First Publication No. 2020-157554

### SUMMARY OF INVENTION

### Technical Problem

However, in the heat transfer materials disclosed in Patent Documents 1 to 4, as an amount of the filler added is increased in order to increase the thermal conductivity, the hardness is increased, and it is difficult to closely adhere the heat transfer material to a surface shape of each member without a gap. Therefore, with attempting to ensure the high thermal conductivity, in a case of a sheet-like heat transfer material, the sheet is hardened, and in a case of a fluid-like heat transfer material, fluidity is lowered, and it is difficult to reduce the thermal resistance generated at the interface by disposing the heat transfer material along the surface shape of each member without a gap in any form.

In addition, in a case where the heat transfer material is diluted with a solvent or the like to reduce the hardness during treatment of the heat transfer material, there is a concern that voids may be generated in the heat transfer material when the solvent is removed after the treatment, and there is a problem that it is difficult to remove the solvent by a method such as heating, depending on the installation location of the heat transfer material.

The present invention has been made in view of such a background, and an object of the present invention is to provide a thermally conductive polymer composition which has high thermal conductivity, high shape conformability due to low viscosity, and high workability without requiring removal of a solvent during curing; and to provide a material for forming a thermally conductive polymer composition, and a thermally conductive polymer obtained therefrom.

### Solution to Problem

In order to achieve the above-described objective, the present invention is configured as follows.

That is, a thermally conductive polymer composition according to an aspect of the present invention contains a liquid rubber having two or more hydroxyl groups in one molecule, a solvent having one or more hydroxyl groups in one molecule, a curing agent having, in one molecule, two or more functional groups which are reactive with both the hydroxyl groups of the liquid rubber and the hydroxyl groups of the solvent, and a filler.

According to the aspect of the present invention, the solvent component is incorporated into the thermally conductive polymer after curing as a constituent material by reacting each of the hydroxyl groups of the liquid rubber and the hydroxyl groups of the solvent with the reactive functional group included in the curing agent to form a chemically bond. As a result, even in a case where the thermal conductivity is increased by increasing a content of the filler, which is a cause of a decrease in fluidity before the curing, the fluidity before the curing is maintained high by the solvent component. Therefore, it is possible to realize a thermally conductive polymer composition having high shape conformability to a surface of each member, excellent workability, and high thermal conductivity.

In the thermally conductive polymer composition according to the aspect of the present invention, a thermal conductivity of the filler may be 10 W/(m·K) or more.

In the thermally conductive polymer composition according to the aspect of the present invention, the liquid rubber may include at least one of polybutadiene, polyisoprene, or polyolefin, which has a plurality of hydroxyl groups.

In the thermally conductive polymer composition according to the aspect of the present invention, the solvent may include at least one of n-butyl carbitol, glycerin, polyethylene glycol monomethyl ether, butyl glycol, propylene glycol, ethylene glycol, or methyl tetraglycol.

In the thermally conductive polymer composition according to the aspect of the present invention, the curing agent may be an isocyanate compound.

In the thermally conductive polymer composition according to the aspect of the present invention, the thermally conductive polymer composition may further contain a tackifier.

A material for forming a thermally conductive polymer composition according to an aspect of the present invention, which is used for forming the thermally conductive polymer composition according to any aspect, the material contains an A liquid containing the liquid rubber and the solvent, and a B liquid containing the curing agent, in which at least one of the A liquid or the B liquid further contains the filler.

A thermally conductive polymer according to an aspect of the present invention is obtained by curing the thermally conductive polymer composition according to any aspect, in which a terminal group includes -[(C₂H₄-O)ₘ-CₙH₂ₙ₊₁] (here, m and n are any natural numbers).

In the thermally conductive polymer according to the aspect of the present invention, a thermal conductivity of the thermally conductive polymer may be 1.5 W/(m·K) or more.

### ADVANTAGEOUS EFFECTS OF INVENTION

According to the aspects of the present invention, it is possible to provide a thermally conductive polymer composition which has high thermal conductivity, high shape conformability due to low viscosity, and high workability without requiring removal of a solvent during curing; and to provide a material for forming a thermally conductive polymer composition, and a thermally conductive polymer obtained therefrom.

### DESCRIPTION OF EMBODIMENTS

Hereinafter, the thermally conductive polymer composition according to the embodiment of the present invention, and a material for forming a thermally conductive polymer composition and a thermally conductive polymer according to the embodiment of the present invention, which are obtained therefrom, will be described with reference to the drawings. Each embodiment to be described below is specifically described for better understanding of the gist of the invention, and does not limit the present invention unless otherwise specified.

### (Thermally conductive polymer composition)

The thermally conductive polymer composition according to the present embodiment contains a liquid rubber, a solvent, a curing agent, and a filler having thermal conductivity. The thermally conductive polymer composition according to the present embodiment is a composition in a state before curing (polymerization reaction).

The liquid rubber may be, for example, a liquid rubber having fluidity at normal temperature, and may have two or more hydroxyl groups (-OH) in one molecule of its compositional formula. In addition, it is desirable that the hydroxyl groups are located at a terminal of the molecule.

Some of the hydroxyl groups in such a liquid rubber are chemically bonded to the functional group of the curing agent during curing of the thermally conductive polymer composition, which will be described later.

As the liquid rubber having 2 or more hydroxyl groups in one molecule in the terminal group, specifically, a hydroxyl group-containing polybutadiene, a hydroxyl group-containing polyisoprene, and a hydroxyl group-containing polyolefin are exemplary examples. Among these, from the viewpoint of favorable fillability of the filler, a hydroxyl group-containing polybutadiene is preferable. These hydroxyl groups may be located at the terminal of the molecule.

For example, as the hydroxyl group-containing polybutadiene, Poly bd (registered trademark) series (number of hydroxyl groups: 0.83 to 1.83 mol/kg, manufactured by Idemitsu Kosan Co.,Ltd.), G series (number of hydroxyl groups: 0.48 to 1.39 mol/kg, manufactured by NIPPON SODA CO., LTD.), or Krasol LBH series (number of hydroxyl groups: undisclosed, manufactured by TOTAL CRAY VALLEY) may be used. In addition, as the hydroxyl group-containing polyisoprene, Poly ip (registered trademark) (number of hydroxyl groups: 0.83 mol/kg, manufactured by Idemitsu Kosan Co.,Ltd.) may be used.

A number-average molecular weight of the liquid rubber is not particularly limited, and for example, a number-average molecular weight in a range of 1,000 or more and 3,000 or less can be used. In addition, a hydroxyl value of the liquid rubber is preferably in a range of 0.5 or more and 2.0 or less. In addition, a viscosity of the liquid rubber is not particularly limited, and for example, may be in a range of 1.0 Pa s or more and 1,000 Pa·s or less.

The solvent is used for improved plasticity of the thermally conductive polymer composition, and may be a compound having one or more hydroxyl groups (-OH) in one molecule of a compositional formula. The hydroxyl group may be located at the terminal of the molecule.

The hydroxyl group in such a solvent is chemically bonded to the functional group of the curing agent during curing of the thermally conductive polymer composition, which will be described later.

A molecular weight of the solvent is preferably 50 to 450, a boiling point of the solvent is preferably 100°C to 250°C, and a viscosity of the solvent is preferably 500 mPa·s or less (25°C).

The solvent may be a polyhydric alcohol.

The above-described solvent may be a solvent compatible with the above-described liquid rubber. The solvent compatible with the above-described liquid rubber refers to a liquid substance in which the liquid rubber and the solvent are mixed at any proportion, and allowed to stand for 10 minutes or longer and visually checked to be not phase-separated.

As the solvent having one or more hydroxyl groups in one molecule, specifically, n-butyl carbitol (diethylene glycol monobutyl ether), glycerin, polyethylene glycol monomethyl ether, butyl glycol, propylene glycol, ethylene glycol, and methyl tetraglycol are exemplary examples.

Since the solvent contained in the thermally conductive polymer composition in the related art is volatilized and removed to cure the thermally conductive polymer composition, the cured thermal conductive polymer does not contain almost any component of the solvent. On the other hand, the solvent contained in the thermally conductive polymer composition according to the present embodiment forms a chemical bond with the liquid rubber by the curing agent during the curing, and thus is to be a part of a component of the thermal conductive polymer composition. In other words, the thermally conductive polymer has a bond of the solvent, the curing agent, and the liquid rubber. In addition, since the solvents or the liquid polymers are bonded to each other with the curing agent, the thermally conductive polymer also has a bond of the solvent, the curing agent, and the solvent or a bond of the liquid rubber, the curing agent, and the liquid rubber. Furthermore, in a case where the curing agent is polyfunctional, it is more desirable because a large number of bonds through the curing agent are formed between the solvent and the liquid polymer.

For the above-described reasons, it is not necessary to use a low-boiling-point solvent having high volatility as the solvent, and a solvent having a wide boiling point range from the low-boiling-point solvent to the high-boiling-point solvent can be used according to the application. In particular, from the viewpoint of ease of work of treatment the thermally conductive polymer composition, a medium-boiling-point solvent or a high-boiling-point solvent is preferable. Specifically, the boiling point of the solvent is preferably 100°C or higher, more preferably 150°C or higher, and still more preferably 180°C or higher.

An appropriate content proportion of the solvent with respect to the liquid rubber is, for example, in a range of 50 parts by mass or more and 600 parts by mass or less with respect to 100 parts by mass of the liquid rubber. By setting the content proportion of the solvent with respect to the liquid rubber to be in such a range, it is possible to ensure fluidity during treatment of the thermally conductive polymer composition to improve workability and to prevent the curing of the liquid rubber component.

It is desirable that the appropriate proportion of the solvent with respect to the liquid rubber is in a range of 100 parts by mass or more and 300 parts by mass or less with respect to 100 parts by mass of the liquid rubber.

The curing agent may have, in one molecule, two or more functional groups which are reactive with both the hydroxyl groups of the liquid rubber and the hydroxyl groups in the solvent molecule. The curing agent of the present embodiment may be a curing agent which is chemically bonded to each of the hydroxyl groups of the liquid rubber and the hydroxyl groups of the solvent. A plurality of hydroxyl groups in the liquid rubber are preferably located at the terminal of the molecule.

As the curing agent having two or more functional groups reactive with the hydroxyl group in one molecule, specifically, an isocyanate compound, an acid anhydride, a carboxylic acid, and an amine are exemplary examples.

A method for curing the thermally conductive polymer composition with such a curing agent is not particularly limited, and for example, a curing method by progress of a polymerization reaction at normal temperature and a method of promoting curing by increasing a reaction rate by heating are exemplary examples.

An appropriate content proportion of the curing agent with respect to the liquid rubber may be, for example, in a range of 50 parts by mass or more and 400 parts by mass or less with respect to 100 parts by mass of the liquid rubber. By setting the content proportion of the curing agent with respect to the liquid rubber to be in such a range, the hydroxyl groups of the liquid rubber and the hydroxyl groups of the solvent can be sufficiently reacted with each other to form a thermally conductive polymer having an appropriate hardness, and excessive hardness and increased brittleness can be prevented.

With respect to 100 parts by mass of the liquid rubber, it is desirable that the content proportion of the curing agent with respect to the liquid rubber is 50 parts by mass or more and 360 parts by mass or less, and it more desirable to be 90 parts by mass or more and 200 parts by mass or less.

The filler is used for increasing the thermal conductivity of the cured thermally conductive polymer, and a metal, a metal oxide, a metal hydroxide, a metal nitride, carbon, or the like can be used. As the metal, gold (319), silver (428), copper (403), aluminum

(236), tungsten (177), titanium (22), nickel (94), and iron (84), and an alloy of two or more of these metals are exemplary examples. The numerical value in parentheses of the metal described above is an example of a thermal conductivity in units of W/(m K). The thermal conductivity of these metals is 10 W/(m·K) or more.

As the metal oxide of the filler, for example, aluminum oxide (20 to 35), magnesium oxide (45 to 60), beryllium oxide (272), zinc oxide (54), silicon oxide (2), and titanium oxide (8) are exemplary examples. In addition, as the metal hydroxide, for example, aluminum hydroxide is an exemplary example. In addition, as the metal nitride, for example, aluminum nitride (150 to 250), boron nitride (30 to 50), and silicon nitride (20 to 90) are exemplary examples. The numerical value in parentheses of the oxide described above is a thermal conductivity in units of W/(m·K).

Furthermore, as the carbon, for example, graphite (100), carbon fiber (94 to 149), fullerene (0.4 in a case of C60), graphene (3000 to 5300), and carbon nanotube (650 to 830 in a case of multilayer) are exemplary examples. The numerical value in parentheses of the carbon described above is a thermal conductivity in units of W/(m·K).

Among these, from the viewpoint of being inexpensive and easily available, aluminum oxide is particularly preferable as a material constituting the filler. In addition, among the metal oxide, the metal hydroxide, and the carbon, the thermal conductivity of the materials excluding the silicon oxide, titanium oxide, and fullerene is 10 W/(m K) or more. The thermal conductivity of the materials other than the fullerene is 2 W/(m·K) or more.

The filler preferably includes one kind or two or more kinds of the above-described material examples; more preferably includes one kind or two or more kinds of the metal oxide, the metal hydroxide, or the metal nitride; and particularly preferably includes aluminum oxide.

A shape of the filler may be particulate, and from the viewpoint of imparting excellent shape conformability and high thermal conductivity after curing to the thermally conductive polymer composition, it is preferable to use spherical particles, disk-like particles, or particles having a rounded shape with less corners (rounded particles).

From the viewpoint of ensuring both fillability and processability, the filler may have a plurality of peaks in a particle size distribution. Therefore, the filler may include a plurality of kinds of filler particles having different average particle diameters (d50) (analysis method: laser diffraction scattering type particle size distribution measurement; measurement device: particle size distribution measurement device (Microtrack MT3300EX II); measurement conditions: US dispersion for 1 minute with sodium hexametaphosphate). In a case where the filler includes two kinds of filler particles having different average particle diameters (d50), for example, it is preferable that a peak on a small particle diameter side is in a range of 0.3 µm or more and 10 µm or less and a peak on a large particle diameter side is in a range of 20 µm or more and 100 µm or less.

In the thermally conductive polymer composition according to the present embodiment, a composition containing any one or more of the liquid rubber, the solvent, or the curing agent may be used as a base material. In this case, an appropriate content proportion of the filler with respect to the base material may be in a range of 200 parts by mass or more and 3,000 parts by mass or less with respect to 100 parts by mass of the base material. By setting the content proportion of the filler to be in such a range, the thermal conductivity of the cured thermally conductive polymer can be further increased while suppressing an increase in viscosity of the thermally conductive polymer composition. It is desirable that the appropriate content proportion of the filler with respect to the base material is in a range of 200 parts by mass or more and 2,500 parts by mass or less with respect to 100 parts by mass of the base material.

In the thermally conductive polymer composition according to the present embodiment, a lubricant, an antioxidant, a flame retardant, a tackifier, or the like may be further added in addition to the above-described liquid rubber, solvent, curing agent, and filler. For example, by further adding a flame retardant, the flame retardant can be used as a heat transfer member having flame retardancy between a battery cell of a lithium ion secondary battery and an exterior case (heat dissipating body).

With the thermally conductive polymer composition according to the present embodiment having the above-described configuration, the hydroxyl groups of the liquid rubber and the hydroxyl groups of the solvent are each chemically bonded to the functional group in the curing agent by a polymerization reaction to be cured, so that the solvent component is incorporated into the cured thermally conductive polymer as a constituent material. As a result, even in a case where the thermal conductivity is increased by increasing the content of the filler which is a cause of the increase in hardness, the hardness is kept low by the solvent component. Therefore, it is possible to realize a thermally conductive polymer composition having high shape conformability, excellent workability, and high thermal conductivity.

The thermally conductive polymer composition according to the present embodiment may be a thermally conductive polymer composition in which a thermal conductivity of the cured thermally conductive polymer is 1.5 W/(m·K) or more.

### (Material for forming thermally conductive polymer composition)

The material for forming a thermally conductive polymer composition according to the present embodiment is a two-liquid mixed type thermally conductive polymer material for forming the above-described thermally conductive polymer composition, and contains an A liquid containing the above-described liquid rubber and solvent, and a B liquid containing the above-described curing agent. In addition, at least one the A liquid or the B liquid, or both of the A liquid and the B liquid further contain the filler.

In a case where a filling amount of the filler in the A liquid and the B liquid is 2,000 parts by mass or less, densities of the A liquid and the B liquid are the same. In at least one of the A liquid or the B liquid, or both of the A liquid and the B liquid, the lubricant, the antioxidant, the flame retardant, the tackifier, or the like, which is mentioned in the thermally conductive polymer composition according to the present embodiment, may be further added.

In the material for forming a thermally conductive polymer composition according to the present embodiment, the A liquid and the B liquid are mixed with each other during use, and the hydroxyl groups of the liquid rubber and the hydroxyl groups of the solvent in the A liquid are chemically bonded to the curing agent contained in the B liquid to be cured. As a treatment method, for example, a method in which a dispenser for mixing two liquids is used for discharging the A liquid and the B liquid in equal volumes, the discharged A liquid and B liquid are mixed to form a thermally conductive polymer composition, and the thermally conductive polymer composition is directly applied to a surface of a member provided with the thermal conductivity polymer can be used.

A method for producing the material for forming a thermally conductive polymer composition according to the present embodiment is not particularly limited, and a known method can be applied. For example, a producing method in which the A liquid and the B liquid are produced by mixing materials other than the filler among the above-described respective constituent materials to prepare a base material, and mixing the base material with the filler contained in at least one of the A liquid or the B liquid, or both of the A liquid and the B liquid is an exemplary example. The mixing order of the constituent materials of the base material is not particularly limited, and can be appropriately determined. As a method of mixing the respective materials, a method of using a mixing device such as a stirring type, a rotating type, and a shaking type is an exemplary example.

As described above, with the material for forming a thermally conductive polymer composition according to the present embodiment, by separating the A liquid containing the liquid rubber and the solvent and the B liquid containing the curing agent from each other, the thermally conductive polymer can be formed by mixing the A liquid and the B liquid at any timing, and it is possible to realize a material for forming a thermally conductive polymer composition, having excellent storage stability.

### (Thermally conductive polymer)

The thermally conductive polymer according to the present embodiment is obtained by curing the above-described thermally conductive polymer composition. In such a thermally conductive polymer, for example, a terminal group is -[(C₂H₄-O)ₘ-CₙH₂ₙ₊₁] (here, m and n are any natural numbers). m is preferably 1 to 20,000. n is preferably 1 to 5.

For example, in the thermally conductive polymer obtained by curing the thermally conductive polymer composition according to the present embodiment, in a case where the liquid rubber is polymerized by a urethane bond, aggregation breakdown is suppressed, so that adhesiveness to the member is improved. The thermal conductivity measured by a steady-state method of such a thermally conductive polymer is, for example, in a range of 1 W/(m K) or more and 5 W/(m K) or less.

Although a description was given of one embodiment of the present invention above, this embodiment is presented as an example and is not intended to limit the scope of the invention. It is possible to implement the embodiment in various other forms and to make various omissions, substitutions, and modifications in a range not departing from the gist of the invention. The embodiment and variations thereof are included within the invention described the scope of the claims and equivalents thereof as well as being included within the scope and the gist of the invention.

### EXAMPLES

Hereinafter, as a sample prepared for Examples 1 to 6 and Comparative Example 1 of the present invention, a thermally conductive polymer composition was formed by mixing the A liquid and the B liquid of a material for forming a thermally conductive polymer composition in equal volumes, and a thermally conductive polymer was obtained by curing the thermally conductive polymer composition. Specific gravities of the A liquid and the B liquid were almost the same, and were approximately 3 g/cm³. The thermal conductivity of each of the thermally conductive polymers was measured.

The thermal conductivity was measured by a one-directional heat flow steady-state comparison method (SCHF, sample temperature: 50°C) using a resin material thermal resistance measuring device (manufactured by Hitachi Technologies and Services,Ltd.) conforming to ASTM D 5470.

Compositions of the A liquid and the B liquid, and the thermal conductivity of the obtained thermally conductive polymer are shown in Table 1 (Examples 1 to 4 of the present invention) and Table 2 (Examples 5 and 6 and Comparative Example 1 of the present invention).

The details of each component are as follows.

### [Liquid rubber]

- Hydroxyl group-containing polybutadiene: Poly bd (registered trademark) series (manufactured by Idemitsu Kosan Co.,Ltd.), G series (manufactured by NIPPON SODA CO., LTD.), Krasol LBH series (manufactured by TOTAL CRAY VALLEY)
- Hydroxyl group-containing polyisoprene: Poly ip (registered trademark) (manufactured by Idemitsu Kosan Co.,Ltd.)

### [Solvent]

- n-Butyl carbitol: (manufactured by Tokyo Chemical Industry Co., Ltd.)
- Naphthenic process oil: SUNTHENE series (manufactured by JAPAN SUN OIL COMPANY,LTD.)

### [Filler]

· Spherical alumina: AS series, AS-C series (both d50 = 5 to 50 µm (analysis method: laser diffraction scattering type particle size distribution measurement; measurement device: particle size distribution measurement device Microtrack MT3300EX II; measurement conditions: US dispersion for 1 minute with sodium hexametaphosphate)) (manufactured by Showa Denko K. K.)
· Spherical and 3-dispersed particle diameter alumina: DAB series (manufactured by Denka Company Limited.)

### [Curing agent (crosslinking agent)]

· Bifunctional isocyanate: MILLIONATE MTL series, HDI, and TDI series (all manufactured by TOSOH CORPORATION), Lupranate (registered trademark) MI (manufactured by BASF INOAC Polyurethanes Ltd.)
· Polyfunctional isocyanate: MILLIONATE MR series (manufactured by TOSOH CORPORATION), Lupranate (registered trademark) series (manufactured by BASF INOAC Polyurethanes Ltd.)

### [Tackifier]

. Terpene resin: CLEARON series, YS POLYESTER series, and YS RESIN series (all manufactured by YASUHARA CHEMICAL CO., LTD.), TAMANOL 901 (manufactured by Arakawa Chemical Industries,Ltd.)

### [Antioxidant]

· Hindered phenol-based antioxidant: ADEKASTAB AO series (manufactured by ADEKA Corporation), Irganox series (manufactured by BASF Japan Ltd.), KEMINOX series (manufactured by Chemipro Kasei Co., Ltd.)

### [Flame retardant]

· Phosphorus-based flame retardant: CR series, PX series, DAIGUARD series, TMP, TEP, TPP, TCP, TXP, and CDP (all manufactured by DAIHACHI Chemical), LEOPHOS series (manufactured by Ajinomoto Fine-Techno Co., Inc.), EXOLIT OP 500 series (manufactured by Clariant Chemicals Japan Ltd.)

**[Table 1]**

| | | | Present Invention Example 1 | | Present Invention Example 2 | | Present Invention Example 3 | | Present Invention Example 4 | |
|---|---|---|---|---|---|---|---|---|---|---|
| | | | Composition | Part by mass | Composition | Part by mass | Composition | Part by mass | Composition | Part by mass |
| A liquid | Base material | Liquid rubber | Hydroxyl group-containing polybutadiene | 40 | Hydroxyl group-containing polybutadiene | 30 | Hydroxyl group-containing polybutadiene | 28.6 | - | - |
| | | | - | - | | - | | - | Hydroxyl group-containing polyisoprene | 28.6 |
| | | Solvent | n-Butyl carbitol | 60 | n-Butyl carbitol | 70 | n-Butyl carbitol | 66.7 | n-Butyl carbitol | 66.7 |
| | | Tackifier | - | - | - | - | | - | - | - |
| | | Antioxidant | - | - | - | - | Hindered phenol-based antioxidant | 4.8 | Hindered phenol-based antioxidant | 4.8 |
| | Filler | Alumina | Spherical alumina | 1191 | Spherical and 3-dispersed particle diameter alumina | 2000 | Spherical and 3-dispersed particle diameter alumina | 2000 | Spherical and 3-dispersed particle diameter alumina | 2000 |
| B liquid | Base material | Curing agent (crosslinking agent) | Bifunctional isocyanate | 51 | Polyfunctional isocyanate | 20 | Polyfunctional isocyanate | 30 | Polyfunctional isocyanate | 30 |
| | | Flame retardant | Phosphorus-based flame retardant | 49 | Phosphorus-based flame retardant | 80 | Phosphorus-based flame retardant | 70 | Phosphorus-based flame retardant | 70 |
| | Filler | Alumina | Spherical alumina | 500 | Spherical and 3-dispersed particle diameter alumina | 925 | Spherical and 3-dispersed particle diameter alumina | 925 | Spherical and 3-dispersed particle diameter alumina | 1000 |
| Thermal conductivity [W/(mK)] | | | 2.70 | | 2.96 | | 1.95 | | 301 | |

**[Table 2]**

| | | | Present Invention Example 5 | | Present Invention Example 6 | | Comparative Example 1 | |
|---|---|---|---|---|---|---|---|---|
| | | | Composition | Part by mass | Composition | Part by mass | Composition | Part by mass |
| A liquid | Base material | Liquid rubber | Hydroxyl group-containing polybutadiene | 14.3 | Hydroxyl group-containing polybutadiene | 19.0 | Hydroxyl group-containing polybutadiene | 40 |
| | | | Hydroxyl group-containing polyisoprene | 14.3 | Hydroxyl group-containing polyisoprene | 19.0 | - | - |
| | | Solvent | n-Butyl carbitol | 66.7 | n-Butyl carbitol | 47.6 | Naphthenic process oil | 60 |
| | | Tackifier | - | - | Terpene resin | 9.5 | - | - |
| | | Antioxidant | Hindered phenol-based antioxidant | 4.8 | Hindered phenol-based antioxidant | 4.8 | - | - |
| | Filler | Alumina | Spherical and 3-dispersed particle diameter alumina | 1700 | Spherical and 3-dispersed particle diameter alumina | 1700 | Spherical alumina | 1100 |
| B liquid | Base material | Curing agent (crosslinking agent) | Polyfunctional isocyanate | 30 | Polyfunctional isocyanate | 30 | Bifunctional isocyanate | 40 |
| | | Flame retardant | Phosphorus-based flame retardant | 70 | Phosphorus-based flame retardant | 70 | Phosphorus-based flame retardant | 60 |
| | Filler | Alumina | Spherical and 3-dispersed particle diameter alumina | 1100 | Spherical and 3-dispersed particle diameter alumina | 1100 | Spherical alumina | 500 |
| Thermal conductivity [W/(mK)] | | | 3.33 | | 3.51 | | 1.40 | |

According to the results shown in Tables 1 and 2, the thermally conductive polymers of Examples 1 to 6 of the present invention, in which the hydroxyl groups of the liquid rubber and the hydroxyl groups of the solvent were chemically bonded to the functional group in the curing agent, had a thermal conductivity of 1.95 to 3.51 W/(m·K), and thus excellent thermal conductivity was obtained. On the other hand, in the thermally conductive polymer of Comparative Example 1, in which the solvent and the curing agent were not chemically bonded to each other, the thermal conductivity remained at a low value of 1.40 W/(m K). Therefore, it was found that the thermally conductive polymer obtained by curing the thermally conductive polymer composition which was obtained by mixing the material for forming a thermally conductive polymer composition according to the embodiment of the present invention had excellent thermal conductivity.

### INDUSTRIAL APPLICABILITY

According to the present invention, it is possible to provide a thermally conductive polymer composition which has high thermal conductivity, high shape conformability due to low viscosity, and high workability without requiring removal of a solvent during curing; and to provide a material for forming a thermally conductive polymer composition, and a thermally conductive polymer obtained therefrom.

## Claims

1. A thermally conductive polymer composition comprising:
a liquid rubber having two or more hydroxyl groups in one molecule;
a solvent having one or more hydroxyl groups in one molecule;
a curing agent having, in one molecule, two or more functional groups which are reactive with both the hydroxyl groups of the liquid rubber and the hydroxyl groups of the solvent; and
a filler.

2. The thermally conductive polymer composition according to Claim 1,
wherein a thermal conductivity of the filler is 10 W/(m·K) or more.

3. The thermally conductive polymer composition according to Claim 1 or 2,
wherein the liquid rubber includes at least one of polybutadiene, polyisoprene, or polyolefin, which has a plurality of hydroxyl groups.

4. The thermally conductive polymer composition according to any one of Claims 1 to 3,
wherein the solvent includes at least one of n-butyl carbitol, glycerin, polyethylene glycol monomethyl ether, butyl glycol, propylene glycol, ethylene glycol, or methyl tetraglycol.

5. The thermally conductive polymer composition according to any one of Claims 1 to 4,
wherein the curing agent is an isocyanate compound.

6. The thermally conductive polymer composition according to any one of Claims 1 to 5, further comprising:
a tackifier.

7. A material for forming a thermally conductive polymer composition, which is used for forming the thermally conductive polymer composition according to any one of claims 1 to 6, the material comprising:
an A liquid containing the liquid rubber and the solvent; and
a B liquid containing the curing agent,
wherein at least one of the A liquid or the B liquid further contains the filler.

8. A thermally conductive polymer obtained by curing the thermally conductive polymer composition according to any one of Claims 1 to 6,
wherein a terminal group includes -[(C₂H₄-O)ₘ-CₙH₂ₙ₊₁] (here, m and n are any natural numbers).

9. The thermally conductive polymer according to claim 8,
wherein a thermal conductivity of the thermally conductive polymer is 1.5 W/(m·K) or more.
